# EUROPÄISCHE PATENTSCHRIFT

(11) **EP 1 676 040 B1**
(45) Veröffentlichungstag und Bekanntmachung des Hinweises auf die Patenterteilung: **22.04.2009**
(21) Anmeldenummer: 04740178.1
(22) Anmeldetag: 23.06.2004
(51) Int. Cl.: F16C 29/06

(54) **FÜHRUNGSWAGEN EINES LINEARW ÄLZLAGERS**
GUIDE CARRIAGE OF A LINEAR ROLLING BEARING
CHARIOT DE GUIDAGE D'UN PALIER A ROULEMENT LINEAIRE

(30) Priorität: 19.07.2003 DE 10332922
(43) Veröffentlichungstag der Anmeldung: 05.07.2006
(73) Patentinhaber: Schaeffler KG, 91074 Herzogenaurach (DE)
(72) Erfinder: NEUFANG, Lothar, 66424 Homburg/Saar (DE); KELLER, Peter, 66892 Bruchmühlbach-Miesau (DE)
(86) Internationale Anmeldenummer: PCT/EP2004/006753
(87) Internationale Veröffentlichungsnummer: WO 2005/019667

(56) Entgegenhaltungen:
- EP-A- 0 919 738
- DE-A- 4 210 299
- US-A- 5 399 023
- US-A- 5 584 581
- US-B1- 6 203 199

## Beschreibung

Die vorliegende Erfindung betrifft einen Führungswagen eines Linearwälzlagers. Derartige Führungswagen sind oftmals mit einem oder mehreren Schmiermittelkanälen versehen, um Schmierstoff an die gewünschten Schmierstellen des Linearwälzlagers zu bringen.

Aus DE 42 10 299 A1 beispielsweise ist ein Führungswagen nach den Merkmalen des Oberbegriffs des Anspruchs 1 bekannt geworden. Am Kopfstück ist ein Schmiernippel angeordnet, der an einen Schmiermittelkanal angeschlossen ist. Der Schmiermittelkanal endet im Bereich des Umlenkabschnittes an der inneren Umlenkung des Kopfstückes. An diesem Ende des Schmiermittelkanals sind Dichtlippen an dem Kopfstück ausgebildet, die an der Stirnseite des Tragkörpers anliegen und das Ende des Schmiermittelkanals schließen. Auf diese Weise ist zunächst sichergestellt, daß im Schmiermittelkanal angeordnetes Schmiermittel nicht unkontrolliert in den Wälzkörperkanal hinein auslaufen kann. Zum Zwecke des Nachschmierens kann nun Schmiermittel über den Schmiernippel durch den Schmiermittelkanal hindurchgedrückt werden, wobei unter dem nun anstehenden Druck im Schmiermittelkanal die Dichtlippen von der Stirnfläche des Tragkörpers abheben und das Schmiermittel in den Umlenkabschnitt, also in den Wälzkörperkanal gelangt. Der Teil des Kopfstückes, der mit den Dichtlippen versehen ist, muß so elastisch ausgebildet sein, daß ein Abheben der Dichtlippen möglich ist. Zwar ermöglichen derartige Führungswagen ein einwandfreies Nachschmieren, jedoch kann je nach Größe des Führungswagens die Ausbildung der Dichtlippen aufwendig sein.

Aus der US 6 203 199 B1 ist ein Führungswagen bekannt, der dem Oberbegriff der Ansprüche 1 und 2 entspricht.
Aufgabe der vorliegenden Erfindung ist es, einen Führungswagen nach den Merkmalen des Oberbegriffs des Anspruchs 1 anzugeben, bei dem dieser Nachteil behoben ist. Erfindungsgemäß wird dieser Nachteil durch Anspruch 1 und 2 gelöst. Der Schlitz ist ausgebidet, wenn das Ventil geöffnet ist. Vorzugsweise ist der Schlitz nicht ausgebildet, wenn das Ventil gesperrt ist. Der Schtitz liegt im Querschnitt des Schmiermittelkanals und braucht demzufolge nicht mit der Stirnfläche des Tragkörpers zusammenwirken. Das bedeutet, daß das Bauteil, an dem das Ventil vorgesehen ist, an sich nicht weich oder elastisch oder beweglich ausgebildet zu sein braucht.

Zumindest ist eines der Kopfstücke mit dem über das Ventil an den Umlenkabschnitt anschließbaren Schmiermittelkanal zur Versorgung mit Schmierstoff versehen. Üblicherweise werden diese auch mehrteilig ausgeführten Kopfstücke aus Kunststoff im Spritzverfahren hergestellt. Das Ventil kann in diesem Fall einstückig an das Kopfstück oder eines der Teile des Kopfstückes angeformt werden, wobei problemlos schon während des Spritzgießens der Schlitz berücksichtigt werden kann. Vorzugsweise sind die den Schlitz begrenzenden Schlitzflächen elastisch gegeneinander gedrückt. Das bedeutet, daß außerhalb der Nachschmierintervalle der Schmiermittelkanal geschlossen ist, wenn die Schlitzte gegeneinander gedrückt sind.

Für die Ausbildung als Ventil eignet sich in besonders günstiger Weise ein Trichter, der durch den zumindest einen Schlitz in Trichtersegmente unterteilt ist, die mit einander benachbarten Schlitzflächen den Schlitz begrenzen. Während des Nachschmierens können unter dem Druck des Schmiermittels die Trichtersegmente auseinander gedrückt werden, so daß die Schlitzflächen voneinander abheben und den Schlitz freigeben, so daß Schmiermittel durch den Schlitz hindurch treten und in den Wälzkörperumlauf gelangen. Vorzugsweise ist der Trichter als Kegel ausgeführt, was insbesondere bei der Herstellung des Trichters aus Kunststoff im Spritzverfahren günstig ist. Wenn der Schmiermittelkanal ein am Umlenkabschnitt gelegenes erstes Ende und ein an der Schmiermittelzuführöffnung - also beispielsweise dort wo der Schmiernippel sitzt - zweites Ende aufweist, ist es zweckmäßig, daß der Trichter mit seiner Trichterspitze dem ersten Ende zugewandt ist. In anderen Worten ausgedrückt, die Trichterspitze liegt in Fließrichtung des Schmiermittels während des Nachschmiervorgangs. Während des Nachschmierens kann das drückende Schmiermittel gegen die Kegelsegmente des Kegels drücken wobei die Kegelsegmente voneinander weggedrückt werden und den Schlitz freigeben. Von der entgegengesetzten Seite her ist ein durchtreten von Schmiermittel durch den Schlitz nicht möglich. Denn sollte während des Verfahrens des Führungswagens Schmiermittel in Richtung auf die Kegelspitze gedrückt werden, so drückt dieses Schmiermittel gegen die äußeren Kegelflächen der Kegelsegmente und drücken diese demzufolge gegeneinander, so daß die den Schlitz verschließenden Kräfte noch zunehmen.

Eine technisch einfach herzustellende und zum Zwecke des Nachschmierens besonders günstige Ausgestaltung des Schlitzes kann darin bestehen , daß der Trichter in Längsrichtug des Schmiermittelkanals gesehen kreuzweise geschlitzt ist. Es sind demzufolge vier Trichtersegmente gebildet, die jeweils elastisch auslenkbar sind so daß sie den Kreuzschlitz freigeben. Vorzugsweise ist der geschlitzte Trichter aus Kunststoff insbesondere im Spritzverfahren hergestellt. Wenn der Trichter im Schmiermittelkanal angeordnet ist, können die Tichtersegmente mit ihrem Außenumfang an die Wand des Schmiermittelkanals einstückig angeformt werden, und zwar so daß jedes Segment noch elastisch auslenkbar ist.

Eine weitere erfindungsgemäße Weiterbildung sieht vor, daß das Kopfstück eine aus Kunststoff gebildete Verteilerplatte umfaßt, die mit einem verzweigten Verteilerkanal für die Verteilung des Schmiermittels, versehen ist, an dessen Enden Übergabebohrungen versehen sind, wobei die Schlitze in den Übergabebohrungen ungeordnet sind. Üblicherweise sind die Führungswagen im Querschnitt gesehen etwa U-förmig augebildet. Der Verteilerkanal kann im Querschnitt durch den Führungswagen gesehen beispielsweise mittig zwischen den beiden Schenkeln des U-förmigen Profils beginnen und dann verzweigt werden zu beiden Schenkeln des Führungswagens. Die Übergabebohrungen enden schließlich im Bereich des Umlenkabschnitts, also des Umlenkkanals. Auch bei dieser erfindungsgemäßen Weiterbildung ist es günstig, wenn der Trichter einstückig an die Verteilerplatte angeformt ist. Zur Reduzierung von Bauteilen wird ferner vorgeschlagen, daß der Umlenkabschnitt eine an sich bekannte innere Umlenkung für die Wälzkörper aufweist, wobei die innere Umlenkung einstückig mit der Verteilerplatte ausgebildet ist. Das bedeutet daß ein einziges Bauteil sowohl den Schmiermittelkanal, als auch das Ventil, als auch die innere Umlenkung aufweist. Derartige Teile können problemlos aus Kunststoff im Spritzverfahren hergestellt werden.

Wenn die Übergabebohrung an der inneren Umlenkung mündet, ist es gemäß einer erfindungsgemäßen Weiterbildung sinnvoll, daß die innere Umlenkung mit zwei benachbarten Kugelrillen für jeweils eine endlose Laufbahn versehen ist, wobei dann die Übergabebohrungen in einem die beiden Kugelrillen trennenden Trennsteg münden. Zum einen ist so sichergestellt, daß die Einmündung außerhalb des Laufbahnbereichs der Wälzkörper liegt, zum anderen ist sichergestellt, daß Schmiermittel gleichermaßen in beiden Kugelrillen gelangt.

Nachstehend wird die Erfindung anhand eines in insgesamt acht Figuren abgebildeten Ausführungsbeispieles näher erläutert. Es zeigen:
- Figur 1: einen erfindungsgemäßen Führungswagen in Explosionsdarstellung, jedoch ohne Wälzkörpersatz,
- Figur 2: einen Querschnitt durch den erfindungsgemäßen Führungswagen aus Figur 1, jedoch mit montierten Wälzkörpersatz,
- Figur 3: eine Verteilerplatte des Kopfstückes des Führungswagens gemäß Figur 1 in vergrößerter perspektivischer Darstellung,
- Figur 4: die Verteilerplatte aus Figur 3 in einer anderen perspektivischen Darstellung,
- Figur 5: die Verteilerplatten gemäß Figuren 3 und 4 in einer Stirnansicht,
- Figur 6: eine Einzelheit der Verteilerplatte in vergrößerter Darstellung,
- Figur 7: ein Schnitt durch die Verteilerplatte gemäß der Linie VII - VII aus Figur 6 und
- Figur 8: in vergrößerter Darstellung eine Einzelheit der Verteilerplatte aus Figur 7.

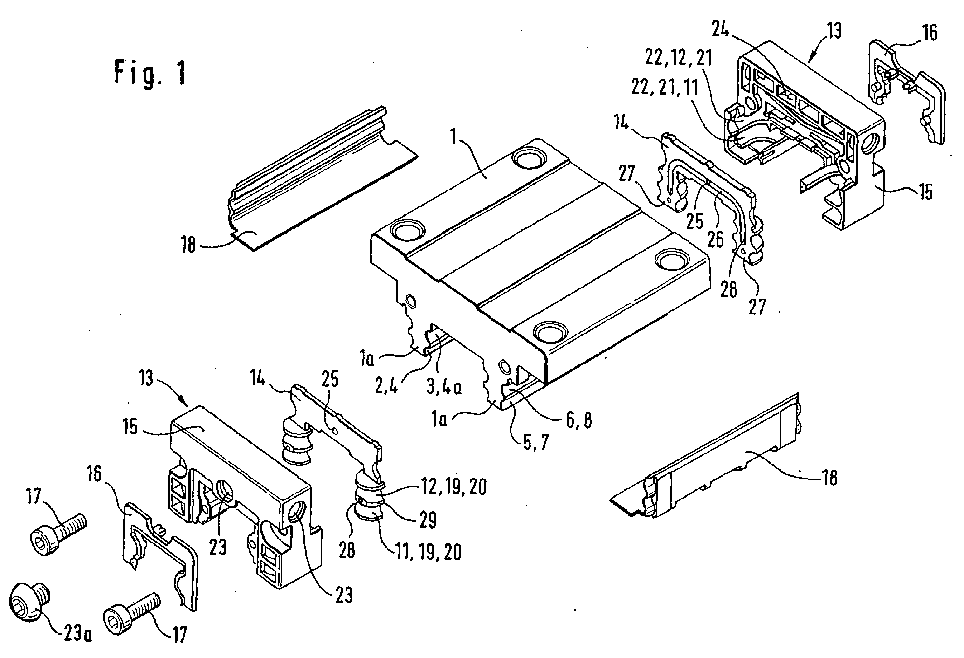

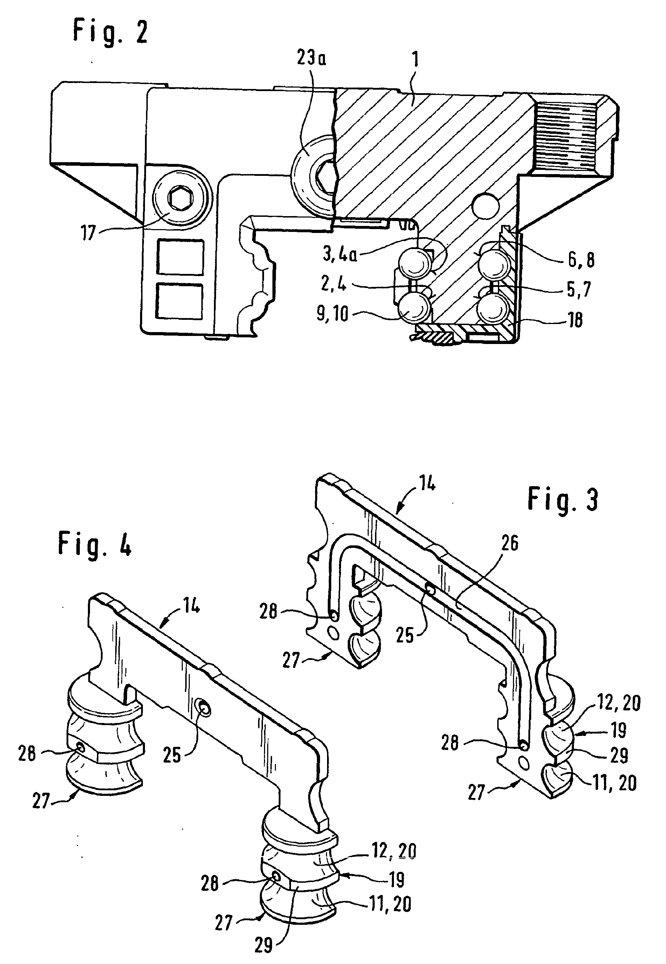

Der erfindungsgemäße Führungswagen aus Figur 1 umfaßt einen etwa U-förmigen Tragkörper 1, an dessen beiden an den Längsseiten ausgebildeten Schenkeln 1 a jeweils zwei Tragabschnitte 2,3 ausgebildet sind, die vorliegend als Kugelrillen 4, 5 ausgeführt sind. Ferner sind an beiden Schenkeln 1a jeweils zwei Rücklaufabschnitte 5, 6 ausgebildet, die vorliegend ebenfalls als Kugelrillen 7, 8 ausgeführt sind. An den Tragabschnitten 2, 3 können in der Figur 2 gezeigte Wälzkörper 9 - die hier als Kugeln 10 ausgeführt sind - unter Last abwälzen. An den Rücklaufabschnitten 5, 6 können diese Wälzkörper 9 lastfrei zurücklaufen. Die Rücklaufabschnitte 5, 6 und die Tragabschnitte 2, 3 sind endlos über Umlenkabschnitte 11, 12 miteinander verbunden, wobei der Umlenkabschnitt 11 den Rücklaufabschnitt 5 mit dem Tragabschnitt 2 und der Umlenkabschnitt 12 den Rücklaufabschnitt 6 mit dem Tragabschnitt 3 endlos verbindet.

Die Umlenkabschnitte 11, 12 sind an Kopfstücken 13 ausgebildet, die an Stirnseiten des Tragkörpers 1 angeflanscht sind. Jedes der Kopfstücke 13 umfaßt eine Verteilerplatte 14, eine Endstück 15, und eine Abstreiferplatte 16. Die Verteilerplatte 14, und die Endplatte 15 werden über Schrauben 17 an den Tragkörper 1 angeschraubt.

Die beiden Schenkel 1 a des Tragkörpers 1 sind ferner im Querschnitt gesehen mit L-förmige Seitenteilen 18 versehen, die die Rücklaufabschnitte 5, 6 überdecken.

In bekannter Weise umfaßt jedes Kopfstück 13 eine innere Umlenkung 19 und eine äußere Umlenkung 21. Die innere Umlenkung 19 ist an der Verteilerplatte 14 ausgebildet und umfaßt zwei Kugelrillen 20, an der die Kugeln 10 abwälzen können. Die äußere Umlenkung 21 ist an der Endplatte 15 ausgebildet und umfaßt Kugelrillen 22, an der die Kugeln 10 abwälzen können.

Sowohl die Verteilerplatte 14 als auch die Endplatte 15 sind beide aus Kunststoff im Spritzverfahren hergestellt.

An der Endplatte 15 sind Gewindebohrungen 23 ausgebildet, in die Schrauben 24 hineingeschraubt sind. In zumindest eine dieser Gewindebohrungen 23 ist ein hier nicht abgebildeter Schmiernippel zum Nachschmieren eingeschraubt. Diese Gewindebohrungen 23 kommunizieren mit einem Schmiermittelkanal 24, der an dem Kopfstück 13 ausgebildet ist. Der Schmiermittelkanal 24 ist sowohl an der Endplatte 15 als auch an der Verteilerplatte 14 ausgebildet. Schmiermittel aus dem an der Endplatte 15 ausgebildeten Teil des Schmiermittelkanals 24 gelangt über eine an der Verteilerplatte 14 ausgebildete Verteilerbohrung 25 an einen verzweigten Verteilerkanal 26, der rillenförmig an der dem Tragkörper 1 zugewandten Seite der Verteilerplatte 14 eingeformt ist. Der Verteilerkanal 26 erstreckt sich etwa U-förmig zu beiden Schenkeln 27 der Verteilerplatte 14. Die beiden Enden des Verteilerkanals 26 münden jeweils in eine Übergabebohrung 28, die ebenfalls an der Verteilerplatte 14 ausgebildet sind. Die Übergabebohrung 28 endet an ihrer von dem Verteilerkanal 26 abgewandten Seite im Bereich der inneren Umlenkung 19, und zwar mündet sie in einen Trennsteg 29 ein, der die beiden Kugelrillen 20 der inneren Umlenkung 19 voneinander trennt.

Da die fertig montierten Verteilerplatten 14 eng und dicht an der Stirnseite des Kopfstückes 1 anliegen, ist der Verteilerkanal 26 einwandfrei abgedichtet, so daß Schmiermittel lediglich durch die Übergabebohrungen 28 die Verteilerplatte 14 verlassen kann.

Die Abstreiferplatten 16 werden auf die Endplatten 15 aufgeklippst. Wenn der Führungswagen auf einer hier nicht abgebildeten Führungsschiene aufgesetzt ist, streifen diese Abstreiferplatten 16 entlang der Oberfläche der Führungsschienen und streichen beispielsweise Verunreinigungen ab, so daß diese nicht in den Bereich der Laufbahnen der Wälzkörper gelangen.

Figur 2 zeigt den erfindungsgemäßen Führungswagen aus Figur 1 im Querhalbschnitt.

In den weiteren Figuren 3 bis 8 sind lediglich in verschiedenen Darstellungen die Verteilerplatte 14 oder Einzelheiten davon abgebildet. Die Figuren 3 und 4 zeigen jeweils eine perspektivische Darstellung der Verteilerplatte 14, wobei Figur 3 deutlich die dem Tragkörper 1 zugewandte und wobei Figur 4 die dem Tragkörper 1 abgewandte Seite zeigt. Der Figur 3 ist besonders deutlich die Ausbildung des rillenförmig eingeformten Verteilerkanals 26 zu entnehmen. Ferner sind deutlich auch die Verteilungbohrung 25 und die Übergabebohrungen 28 dargestellt. Figur 4 zeigt, daß die diese Übergabebohrungen 28 an dem Trennsteg 29 der inneren Umlenkung 19 enden.

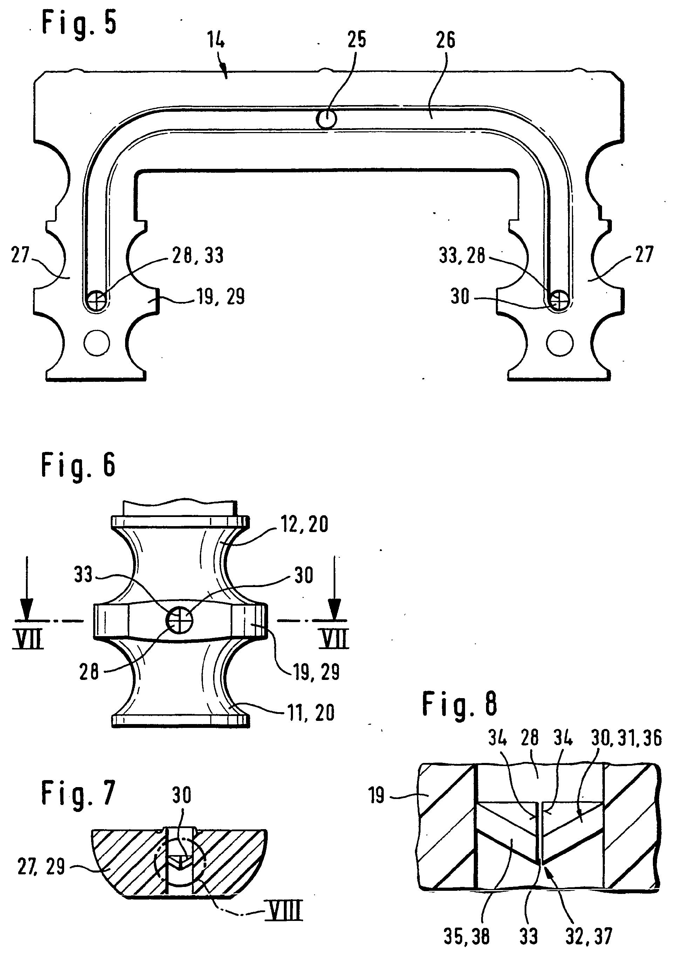

Figur 5 zeigt eine Ansicht der Verteilerplatte 14 von der dem Tragkörper 1 zugewandten Seite. Deutlich sind wiederum der Verteilerkanal 26, die Verteilerbohrung 25 und die Übergabebohrungen 28 abgebildet.

Figur 6 zeigt den Bereich der inneren Umlenkung 19 der Verteilerplatte 14 in stark vergrößerter Darstellung, und zwar die dem Tragkörper 1 abgewandte Seite. Die gemeinsame Betrachtung der Figuren 6, 7 und 8 zeigt deutlich die Anordnung eines Ventils 30 in der Übergabebohrung 28. Dieses Ventil 30 ist durch einen tellerförmigen Kegel 31 gebildet, wobei eine Kegelspitze 32 in Fließrichtung des Schmiermittels liegt. Die Kegelspitze 32 ist also dem Trennsteg 29 zugewandt. Der Kegel 31 ist kreuzweise geschlitzt wie insbesondere der Figur 6 zu entnehmen ist. Dieser Kreuzschlitz 33 wird begrenzt durch Schlitzflächen 34. Durch den Kreuzschlitz 33 ist der Kegel 31 in vier Kegelsegmente 35 unterteilt. Jedes Kegelsegment 35 ist an seinem Außenumfang einstückig an die Verteilerplatte 14 angeformt.

Figur 8 zeigt deutlich die Ausbildung des Kreuzschlitzes 33 in einem Schnitt durch die Übergabebohrung 28. Diese Darstellung entspricht der Situation während des Nachschmierens des Führungswagens. Außerhalb der Nachschmierintervalle ist der Kreuzschlitz 33 nicht ausgebildet, denn die den Kreuzschlitz 33 begrenzenden Schlitzflächen 34 liegen dicht aneinander an. Dies ist möglich, da die Kegelsegmente 35 federnd gegeneinander angedrückt sind. Wenn der Schmiermittelkanal 24 zur Nachschmierung mit weiterem Schmiermittel beaufschlagt wird, fließt das Schmiermittel - wenn man die Darstellung gemäß Figur 8 zugrunde legt - von oben nach unten, das heißt das Schmiermittel drückt gegen die innere Kegelfläche des Kegels 31. Die Kegelsegmente 35 weichen dem Druck des Schmiermittels aus, und wandern unter federelastischer Auslenkung nach unten, und geben dadurch den Kreuzschlitz 33 frei. In dieser Situation kann das Schmiermittel durch den Kreuzschlitz 34 hindurch und in den Umlenkabschnitt 11, 12 gelangen.

Der Kegel 31 arbeitet hier deshalb als Ventil, da bei einer gedachten entgegengerichteten Beaufschlagung mit Druck die Kegelsegmente 35 zunehmend gegeneinander gedrückt werden, so daß die Schlitzflächen 34 noch fester aneinander anliegen. Das bedeutet, bei entgegengerichteter Beaufschlagung ist der Kreuzschlitz 33 nicht ausgebildet.

In allgemeinerer Form kann der Kegel 31 auch als Trichter 36 bezeichnet werden, wobei dann die Kegelspitze 32 als Trichterspitze 37 und die Kegelsegmente 35 als Trichtersegmente bezeichnet werden können. Der Trichter 36 kann zum Beispiel anders als bei einem Kegelprofil auch durch mehrere ebene Flächen gebildet sein, die schiefwinklig zueinander angeordnet sind. Die Wirkungsweise würde sich jedoch nicht von der des Kegels unterscheiden.

### Bezugszahlenliste

- 1: Tragkörper
- 1 a: Schenkel
- 2: Tragabschnitt
- 3: Tragabschnitt
- 4: Kugellrille
- 5: Rücklaufabschnitt
- 6: Rücklaufabschnitt
- 7: Kugelrille
- 8: Kugelrille
- 9: Wälzkörper
- 10: Kugel
- 11: Umlenkabschnitt
- 12: Umlenkabschnitt
- 13: Kopfstück
- 14: Verteilerplatte
- 15: Endplatte
- 16: Abstreiferplatte
- 17: Schraube
- 18: Seitenteil
- 19: innere Umlenkung

- 20: Kugelrille
- 21: äußere Umlenkung
- 22: Kugelrille
- 23: Gewindebohrung
- 24: Schmiermittelkanal
- 25: Verteilerbohrung
- 26: Verteilerkanal
- 27: Schenkel
- 28: Übergabebohrung
- 29: Trennsteg
- 30: Ventil
- 31: Kegel
- 32: Kegelspitze
- 33: Kreuzschlitz
- 34: Schlitzfläche
- 35: Kegelsegment
- 36: Trichter
- 37: Trichterspitze
- 38: Trichtersegment

## Patentansprüche

1. Führungswagen eines Linearwälzlagers, mit wenigstens einer endlosen Laufbahn für Wälzkörper (9), und mit einem Tragkörper (1), an dessen beiden Längseiten jeweils ein Tragabschnitt (2, 3) und ein Rücklaufabschnitt (5, 6) der endlosen Laufbahn vorgesehen ist, wobei der Tragabschnitt (2, 3) unter Last abwälzende Wälzkörper (9) und der Rücklaufabschnitt (5, 6) für lastfrei rücklaufende Wälzkörper (9) vorgesehen ist, und mit an Stirnseiten des Tragkörpers (1) angeordneten Kopfstücken (13), die jeweils einen den Rücklaufabschnitt (5, 6) mit dem Tragabschnitt (5, 6) verbindenden Umlenkabschnitt (11, 12) aufweisen, wobei ein über ein Ventil (30) an die Laufbahn der Wälzkörper (9) anschließbarer Schmiermittelkanal (24) zur Versorgung mit Schmiermittel vorgesehen ist, wobei das Ventil (30) einen für den Durchlaß von Schmiermittel vorgesehenen und den Querschnitt des Schmiermittelkanals (24) durchkreuzenden Schlitz (33) aufweist, der von Schlitzflächen (34) begrenzt ist, wobei die Schlitzflächen (34) bei gesperrtem Ventil (30) unter Schließen des Schlitzes (33) aneinander anliegen, und wobei zumindest eines der Kopfstücke (13) mit dem über das Ventil (30) an den Umlenkabschnitt (11, 12) anschließbaren Schmiermittelkanal (24) zur Versorgung mit Schmiermittel versehen ist, und wobei das Kopfstück (13) eine Verteilerplatte (14) umfasst, die mit einem verzweigten Verteilerkanal (26) versehen ist, an dessen Enden Übergabebohrungen (28) versehen sind, wobei die Übergabebohrung (28) an der inneren Umlenkung (19) einmündet **dadurch gekennzeichnet, dass** die Schlitze (33) in den Übergabebohrungen (28) angeordnet sind.

2. Führungswagen eines Linearwälzlagers, mit wenigstens einer endlosen Laufbahn für Wälzkörper (9), und mit einem Tragkörper (1), an dessen beiden Längseiten jeweils ein Tragabschnitt (2, 3) und ein Rücklaufabschnitt (5, 6) der endlosen Laufbahn vorgesehen ist, wobei der Tragabschnitt (2, 3) unter Last abwälzende Wälzkörper (9) und der Rücklaufabschnitt (5, 6) für lastfrei rücklaufende Wälzkörper (9) vorgesehen ist, und mit an Stirnseiten des Tragkörpers (1) angeordneten Kopfstücken (13), die jeweils einen den Rücklaufabschnitt (5, 6) mit dem Tragabschnitt (5, 6) verbindenden Umlenkabschnitt (11, 12) aufweisen, wobei ein über ein Ventil (30) an die Laufbahn der Wälzkörper (9) anschließbarer Schmiermittelkanal (24) zur Versorgung mit Schmiermittel vorgesehen ist, wobei das Ventil (30) einen für den Durchlaß von Schmiermittel vorgesehenen und den Querschnitt des Schmiermittelkanals (24) durchkreuzenden Schlitz (33) aufweist, der von Schlitzflächen (34) begrenzt ist, wobei die Schlitzflächen (34) bei gesperrtem Ventil (30) unter Schließen des Schlitzes (33) aneinander anliegen, und wobei das Ventil (30) im Schmiermittelkanal (24) angeordnet ist, **dadurch gekennzeichnet**, das das ventil als Trichter (36) in Form eines tellerförmigen Kegels ausgebildet ist, der durch den zumindest einen Schlitz (33) in Trichtersegmente (38) unterteilt ist, die mit einander benachbarten Schlitzflächen (34) den Schlitz (33) begrenzen, wobei der Schmiermittelkanal (24) mit einem am Umlenkabschnitt (11, 12) gelegenen ersten Ende und mit einem an einer Schmiermittelzufuhröffnung gelegenen zweiten Ende versehen ist, wobei der Trichter (36) mit seiner Trichterspitze (37) dem ersten Ende zugewandt ist, und wobei der Trichter (36) kreuzweise geschlitzt ist.

3. Führungswagen nach Anspruch 2, bei dem der Trichter als Kegel (31) ausgeführt ist.

4. Führungswagen nach Anspruch 2, bei dem der Trichter (36) mit seiner Trichterspitze (37) in Strömungsrichtung des Schmiermittels angeordnet ist.

5. Führungswagen nach Anspruch 2, bei dem der geschlitzte Trichter (36) aus Kunststoff insbesondere im Spritzverfahren hergestellt ist.

6. Führungswagen nach Anspruch 1, bei dem die den Schlitz (33) begrenzenden Schlitzflächen (34) elastisch gegeneinander gedrückt sind.

7. Führungswagen nach Anspruch 1, bei dem die Schlitzflächen (34) einstückig an die Verteilerplatte (14) angeformt sind.

8. Führungswagen nach den Ansprüchen 2 und 7, bei dem der Trichter (36) einstückig an die Verteilerplatte (14) angeformt ist.

9. Führungswagen nach Anspruch 8, bei dem der Umlenkabschnitt (11, 12) eine an sich bekannte innere Umlenkung (19) für die Wälzkörper (9) aufweist, wobei die innere Umlenkung (19) einstückig mit der Verteilerplatte (14) ausgebildet ist.

10. Führungswagen nach Anspruch 1, bei dem die innere Umlenkung (19) mit zwei benachbarten Kugelrillen (20) jeweils für eine endlose Laufbahn versehen sehen ist, wobei die Übergabebohrung (28) in einen die beiden Kugelrillen (20) trennenden Trennsteg (29) münden.

## Claims

1. Guide carriage of a linear roller bearing, having at least one endless raceway for rolling bodies (9), and having a carrying body (1), on the two longitudinal sides of which in each case one carrying section (2, 3) and one return section (5, 6) of the endless raceway is provided, the carrying section (2, 3) being provided rolling bodies (9) which roll under load and the return section (5, 6) being provided for rolling bodies (9) which return without load, and having head pieces (13) which are arranged on end sides of the carrying body (1) and in each case have one deflection section (11, 12) which connects the return section (5, 6) to the carrying section (2, 3), a lubricant channel (24) being provided for the supply of lubricant, which lubricant channel (24) can be connected to the raceway of the rolling body (9) via a valve (30), the valve (30) having a slot (33) which is provided for the passage of lubricant, crosses the cross section of the lubricant channel (24) and is delimited by slot faces (34), the slot faces (34) bearing against one another when the valve (30) is shut, with the slot (33) being closed, and at least one of the head pieces (13) being provided with the lubricant channel (24) which can be connected to the deflection section (11, 12) via the valve (30), for supplying lubricant, and the head piece (13) comprising a distributor plate (14) and is provided with a branched distributor channel (26), at the ends of which transfer holes (28) are provided, the transfer hole (28) opening at the inner deflection means (19), **characterized in that** the slots (33) are arranged in the transfer holes (28).

2. Guide carriage of a linear roller bearing, having at least one endless raceway for rolling bodies (9), and having a carrying body (1), on the two longitudinal sides of which in each case one carrying section (2, 3) and one return section (5, 6) of the endless raceway is provided, the carrying section (2, 3) being provided rolling bodies (9) which roll under load and the return section (5, 6) being provided for rolling bodies (9) which return without load, and having head pieces (13) which are arranged on end sides of the carrying body (1) and in each case have one deflection section (11, 12) which connects the return section (5, 6) to the carrying section (5, 6), a lubricant channel (24) being provided for the supply of lubricant, which lubricant channel (24) can be connected to the raceway of the rolling body (9) via a valve (30), the valve (30) having a slot (33) which is provided for the passage of lubricant, crosses the cross section of the lubricant channel (24) and is delimited by slot faces (34), the slot faces (34) bearing against one another when the valve (30) is shut, with the slot (33) being closed, and the valve (30) being arranged in the lubricant channel (24), **characterized in that** the value is configured as a funnel (36) in the form of a plate-shaped cone, which is divided by the at least one slot (33) into funnel segments (38) which delimit the slot (33) with slot faces (34) which are adjacent to one another, the lubricant channel (24) being provided with a first end which is situated at the deflection section (11, 12) and with a second end which is situated at a lubricant feed opening, the funnel tip (37) of the funnel (36) facing the first end and the funnel (36) having slots in the shape of a cross.

3. Guide carriage according to Claim 2, in which the funnel is configured as a cone (31).

4. Guide carriage according to Claim 2, in which the funnel tip (37) of the funnel (36) is arranged in the flow direction of the lubricant.

5. Guide carriage according to Claim 2, in which the slotted funnel (36) is manufactured from plastic, in particular using the injection molding process.

6. Guide carriage according to Claim 1, in which the slot faces (34) which delimit the slot (33) are pressed against one another elastically.

7. Guide carriage according to Claim 1, in which the slot faces (34) are formed integrally on the distributor plate (14).

8. Guide carriage according to Claims 2 and 7, in which the funnel (36) is formed integrally on the distributor plate (14).

9. Guide carriage according to Claim 8, in which the deflection section (11, 12) has an inner deflection means (19), known per se, for the rolling bodies (9), the inner deflection means (19) being configured integrally with the distributor plate (14).

10. Guide carriage according to Claim 1, in which the inner deflection means (19) is provided with two adjacent ball grooves (20) in each case for one endless raceway, the transfer hole (28) opening into a separating web (29) which separates the two ball grooves (20).

## Revendications

1. Chariot de guidage d'un palier à roulement linéaire comprenant au moins une piste de roulement sans fin pour des corps de roulement (9), et un corps porteur (1) sur les deux côtés longitudinaux duquel est à chaque fois prévue une portion de support (2, 3) et une portion de retour (5, 6) de la piste de roulement sans fin, la portion de support (2, 3) étant prévue pour des corps de roulement (9) roulant en charge et la portion de retour (5, 6) étant prévue pour des corps de roulement (9) revenant sans charge, et comprenant des pièces de tête (13) disposées au niveau des côtés frontaux du corps porteur (1), qui présentent à chaque fois une portion de déviation (11, 12) reliant la portion de retour (5, 6) à la portion de support (2, 3), un canal de lubrifiant (24) pouvant être raccordé par le biais d'une soupape (30) à la piste de roulement des corps de roulement (9) étant prévu pour l'alimentation en lubrifiant, la soupape (30) présentant une fente (33) prévue pour le passage de lubrifiant et croisant la section transversale du canal de lubrifiant (24), laquelle fente est limitée par des surfaces de fente (34), les surfaces de fente (34) s'appliquant l'une contre l'autre lorsque la soupape (30) est fermée, en fermant la fente (33), et au moins l'une des pièces de tête (13) étant pourvue du canal de lubrifiant (24) pour l'alimentation en lubrifiant, lequel peut être raccordé par le biais de la soupape (30) à la portion de déviation (11, 12), et la pièce de tête (13) comprenant une plaque de distribution (14), qui est pourvue d'un canal de distribution ramifié (26), aux extrémités duquel sont prévus des alésages de transfert (28), l'alésage de transfert (28) débouchant au niveau de la déviation interne (19), **caractérisé en ce que** les fentes (33) sont disposées dans les alésages de transfert (28).

2. Chariot de guidage d'un palier à roulement linéaire comprenant au moins une piste de roulement sans fin pour des corps de roulement (9), et un corps porteur (1) sur les deux côtés longitudinaux duquel est à chaque fois prévue une portion de support (2, 3) et une portion de retour (5, 6) de la piste de roulement sans fin, la portion de support (2, 3) étant prévue pour des corps de roulement (9) roulant en charge et la portion de retour (5, 6) étant prévue pour des corps de roulement (9) revenant sans charge, et comprenant des pièces de tête (13) disposées au niveau des côtés frontaux du corps porteur (1), qui présentent à chaque fois une portion de déviation (11, 12) reliant la portion de retour (5, 6) à la portion de support (2, 3), un canal de lubrifiant (24) pouvant être raccordé par le biais d'une soupape (30) à la piste de roulement des corps de roulement (9) étant prévu pour l'alimentation en lubrifiant, la soupape (30) présentant une fente (33) prévue pour le passage de lubrifiant et croisant la section transversale du canal de lubrifiant (24), laquelle fente est limitée par des surfaces de fente (34), les surfaces de fente (34) s'appliquant l'une contre l'autre lorsque la soupape (30) est fermée, en fermant la fente (33), et la soupape (30) étant disposée dans le canal de lubrifiant (24),
**caractérisé en ce que** la soupape est réalisée sous forme d'entonnoir (36) en forme de cône en forme d'assiette, qui est divisé par l'au moins une fente (33) en segments d'entonnoir (38) qui limitent la fente (33) avec des surfaces de fente (34) adjacentes les unes aux autres, le canal de lubrifiant (24) étant pourvu d'une première extrémité située au niveau de la portion de déviation (11, 12) et d'une deuxième extrémité située au niveau d'une ouverture d'alimentation en lubrifiant, l'entonnoir (36) étant tourné avec sa pointe d'entonnoir (37) vers la première extrémité, et l'entonnoir (36) étant fendu en forme de croix.

3. Chariot de guidage selon la revendication 2, dans lequel l'entonnoir est réalisé sous forme de cône (31).

4. Chariot de guidage selon la revendication 2, dans lequel l'entonnoir (36) est disposé avec sa pointe d'entonnoir (37) dans le sens de l'écoulement du lubrifiant.

5. Chariot de guidage selon la revendication 2, dans lequel l'entonnoir fendu (36) est fabriqué en plastique, en particulier dans un procédé d'injection.

6. Chariot de guidage selon la revendication 1, dans lequel les surfaces de fente (34) limitant la fente (33) sont pressées élastiquement l'une contre l'autre.

7. Chariot de guidage selon la revendication 1, dans lequel les surfaces de fente (34) sont moulées d'une seule pièce sur la plaque de distribution (14).

8. Chariot de guidage selon les revendications 2 et 7, dans lequel l'entonnoir (36) est moulé d'une seule pièce sur la plaque de distribution (14).

9. Chariot de guidage selon la revendication 8, dans lequel la portion de déviation (11, 12) présente une déviation interne connue en soi (19) pour les corps de roulement (9), la déviation interne (19) étant réalisée d'une seule pièce avec la plaque de distribution (14).

10. Chariot de guidage selon la revendication 1, dans lequel la déviation interne (19) est pourvue de deux gorges sphériques adjacentes (20), à chaque fois pour une piste de roulement sans fin, l'alésage de transfert (28) débouchant dans une nervure de séparation (29) séparant les deux gorges sphériques (20).
